# EUROPEAN PATENT SPECIFICATION

(11) **EP 1 785 316 B1**
(45) Date of publication and mention of the grant of the patent: **11.03.2009**
(21) Application number: 06122869.8
(22) Date of filing: 24.10.2006
(51) Int. Cl.: B60R 19/48

(54) **Mounts for vehicle parking sensors**
Halterung für Fahrzeugparksensoren
Fixation pour détecteurs d'aide au stationnement de véhicule

(30) Priority: 12.11.2005 GB 0523127
(43) Date of publication of application: 16.05.2007
(73) Proprietor: Nissan Motor Manufacturing (UK) Ltd., Cranfield, Bedfordshire MK43 0DB (GB)
(72) Inventor: Brown, Alistair, Cranfield, Bedfordshire MK43 0DB (GB)
(74) Representative: Hufton, Victoria Alice

(56) References cited:
- EP-A1- 1 083 099
- DE-A1- 19 939 747
- US-A1- 2003 160 687
- US-A1- 2005 242 933
- US-B1- 6 902 215

## Description

This invention relates to parking sensors for vehicles and in particular to mounts for such sensors. One such mount is described according to the preamble of claim 1, in DE 199 397 47A.

It is increasingly common for vehicles to be fitted with parking sensors to aid manoeuvring in confined spaces. Parking sensors, also known as parking distance sensors or simply as parking aids, typically operate by sonar principles. Each sensor functions as a transceiver for emitting and receiving sound energy at ultrasonic frequencies. When reflected sound energy indicates that the vehicle is close to an obstacle, the driver is provided with an audible and/or visual alert within the cabin of the vehicle. That alert typically indicates the closeness of the obstacle, for example by a change in the sound of the alert such as the frequency of beeps. The alert may also indicate the position of the obstacle with respect to the vehicle, for example by a variable visual display.

Parking sensors are usually mounted in arrays of between two and six sensors spaced symmetrically across one or both bumpers of the vehicle, although other mounting locations are possible, for example in under-bumper structures. References to bumpers in this specification are to be taken to include all such structures unless the context demands otherwise. Most commonly, rearward-facing sensors are provided to assist with reversing although it is also common to provide forward-facing sensors to help the driver to gauge clearance around the front of the vehicle. Bumper-mounted sensors can be attached to the bumper itself or to an insert such as a resilient rubbing strip in the bumper. They may be fitted to the bumper by vehicle manufacturers or component manufacturers as original equipment, or by vehicle workshops as an aftermarket accessory. Ease of fitting is therefore desirable.

Most modem vehicle bumpers have elastically-deformable skins of moulded plastics such as polypropylene. Attaching a parking sensor directly to such a bumper involves making a hole in the skin at an appropriate location and fitting a collar-like mount into the hole that in turn supports the sensor. In one known arrangement, the mount comprises a tubular bezel for receiving the sensor. The sensor has a generally cylindrical body extending from a transducer at a proximal end to a connector at a distal end. The bezel has an external flange at its proximal end that abuts the external face of the bumper skin around the hole to provide a neat finish around the transducer end of the sensor. A tubular clip surrounds and co-operates with a distal projection of the bezel that protrudes through the hole behind the bumper skin, the clip being secured to the projection by a snap-fit arrangement that holds the bezel in the hole. The clip has an internal flange at its proximal end that bears against the internal face of the skin when the clip is secured to the bezel. Consequently, the skin of the bumper is then sandwiched or clamped between the external flange of the bezel and the internal flange of the clip. When a parking sensor is retained by the bezel, for example in a snap-fit arrangement, the sensor is thereby located with respect to the bumper.

It is desirable for all of the parking sensors of an array to face horizontally and perpendicularly to the local plan curvature of the bumper skin, not only for correct functioning but also for aesthetic purposes. It is also desirable that the bezel of each mount lies neatly against the surrounding bumper skin. This ensures a secure retention force and gives an aesthetically-pleasing finish without gaps that could trap dirt or readily admit water. Unfortunately the demands of vehicle styling mean that the local curvature or profile of a bumper skin tends to vary between one sensor location and another.

These demands imply the necessity of individually-designed mounts for different sensor locations. However, the use of different mounts undermines desirable economies of scale; it also necessitates having to choose which mount is appropriate for which location, which makes installation or assembly needlessly complex. Another problem in this regard is that it may be possible inadvertently to insert a bezel into its hole in the wrong orientation, such as upside down. If the clip is snap-fitted into engagement with the bezel before the orientation of the bezel is corrected, it may be impossible to reorient the assembly or to disassemble the clip from the bezel without damaging one or both parts, or even the bumper itself. It is also possible for a poorly-located mount to turn within a hole, hence misaligning the parking sensor retained by the mount.

Even if a parking sensor mount is designed specially to suit the curvature of a bumper at a particular sensor location, manufacturing tolerances in the large moulding thatdefines the bumper skin mean there is no guarantee that the mount will be a perfect fit. Indeed, it may not even be possible to determine the exact shape of a bumper until an example of a bumper skin has been produced and measured. It may therefore be necessary to fine-tune the dimensions of the mount at a late stage, which is costly and can delay vehicle development.

Existing parking sensor mounts are deficient in dealing with these often-conflicting demands.

Against this background, the invention resides in a mount (22) for a vehicle parking sensor (24), the mount (22) comprising:
a bezel (26) for receiving the sensor (24), the bezel (26) having a flange (44) at
its proximal end and a body (28) extending distally from the flange (44); and
a clip (28) also having a flange (84) at its proximal end and a body (88) extending distally from the flange (84), the clip (28) is configured to be engageable with the bezel (26) to retain the bezel (26) at a sensor location on the vehicle, and wherein the flange of the clip (84) is configured to co-operate with the flange (44) of the bezel to embrace the edge of a mounting hole provided in the vehicle at the sensor location:
   wherein the flange (84) of the clip (28) is attached to the body (88) of the clip for resilient movement of at least a majority of said flange (84) with respect to said body:
characterised by the flange (84) having a face (86) configured to bear against the periphery of the mounting hole and a plurality of integrally-moulded pads (90) are distributed around that face (86).

The height of the pads being determinable by adjustment of a mould tool used to make the clip.

Desirably, the parking sensor mount of the invention is able to accommodate or compensate for variations in the local shape or curvature of a bumper skin at different locations on a bumper or indeed on different bumpers. The mounts that support an array of sensors may therefore be identical to one another, not only for economies of scale but also to avoid having to choose which mount is appropriate for which sensor location. The invention also has the benefit of keeping the bezel neat and compact.

Preferably, the flange of the clip extends completely around the body of the clip and is attached to that body by a plurality of supports distributed around the body. Gaps may be maintained between the flange and the body of the clip between the supports. For optimal flexibility, the gaps collectively extend around a majority of the circumference of the body of the clip.

The bodies of the bezel and the clip may be substantially tubular, the arrangement being such that the body of the clip surrounds the body of the bezel when the clip is engaged with the bezel. It is also preferred that the bodies of the bezel and the clip have open distal ends and aligned lateral cut-outs at the distal end to accommodate parking sensors having laterally-extending connector parts.

The bezel includes formations to interact with the periphery of the mounting hole. For example, the formations may include a flat wall of the body of the bezel that co-operates with a correspondingly shaped section of the periphery of the mounting hole to prevent angular movement of the bezel within the hole. For the same purpose, the formations may include one or more distally-extending ridges that engage with the periphery of the mounting hole. The formations may also, or alternatively, include an asymmetric bulge co-operable with a corresponding recess in the periphery of the mounting hole to ensure correct orientation of the bezel upon insertion of the bezel into the hole. Other means for preventing inadvertent mis-insertion of the bezel into the mounting hole are possible, such as a bulge in the periphery of the mounting hole co-operable with a corresponding asymmetric recess in the body of the bezel.

At least one resilient tab may extend distally from the bezel for engagement with a parking sensor, the tab preferably including a cut-out for engagement with a spigot on the sensor. Elegantly, the tab also effects engagement of the clip to the bezel, for example by including a further cut-out for engagement with a spigot on the clip. Also, the tab is preferably at least partially defined by slots in a wall of the bezel and the clip includes ridges that engage within the slots upon engagement of the clip with the bezel.

The invention extends to the combination of a parking sensor for a vehicle fitted with or into the mount of the invention, to a clip for that mount and to a bezel for that mount. The invention also encompasses a vehicle equipped with one or more parking sensors and having one or more of the mounts of the invention.

In order that this invention may be more readily understood, reference will now be made, by way of example, to the accompanying drawings in which:
Figure 1 is a side view showing a section through a bumper skin to which a parking sensor is attached by means of a mount comprising a bezel and a clip;
Figure 2 is a perspective view of a typical parking sensor in the assembly of Figure 1, viewed from above and from a proximal end;
Figure 3 is a perspective view of a bezel for receiving the sensor of Figure 2, viewed from its distal end and right side;
Figure 4 is a perspective view of the bezel of Figure 3, viewed from its proximal end and right side;
Figure 5 is a perspective view corresponding to Figure 2 but showing the sensor therein assembled with the bezel of Figures 3 and 4;
Figure 6 is a perspective view of a clip for engagement with the bezel of Figures 3 and 4, viewed from its proximal end and right side;
Figure 7 is a perspective view of the clip of Figure 6, viewed from its proximal end;
Figure 8 is a perspective view of the clip of Figures 6 and 7, viewed from its distal end and right side;
Figure 9 is a perspective view from the proximal end and right side corresponding to Figure 4 but showing a clip of Figures 6, 7 and 8 assembled with the bezel of Figures 3 and 4;
Figure 10 is a perspective view from the distal end and right side of the assembly of Figure 9;
Figure 11 is a side view of the assembly of Figures 9 and 10;
Figure 12 is a perspective view from the proximal end and right side of an assembly of the sensor of Figure 2 with the bezel of Figures 3 and 4 and the clip of Figures 6, 7 and 8; and
Figure 13 is a perspective view from the distal end and left side of the assembly of Figure 12.

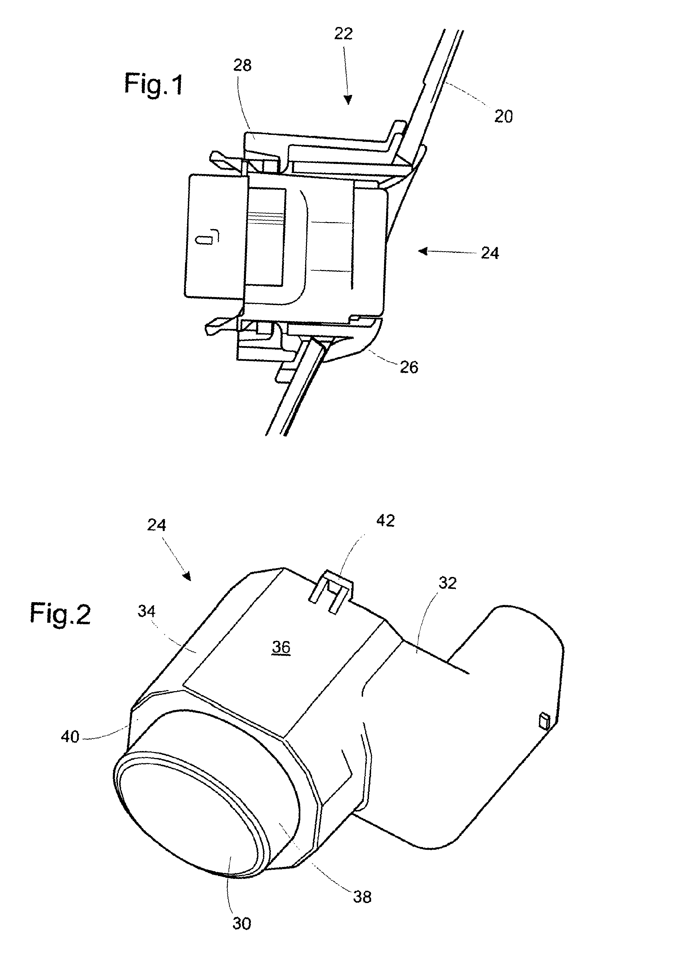

To recap with reference to Figure 1 of the drawings, a vehicle bumper typically comprises an elastically-deformable skin 20 of moulded plastics such as polypropylene. A hole made in the bumper skin 20 at a desired sensor location receives a collar-like mount 22 that in turn holds a sensor 24. That mount 22 comprises a generally tubular bezel 26 for receiving the sensor 24, and a generally tubular clip 28 engageable with and around the bezel 26 to retain the bezel 26 within the hole in the bumper skin 20. The central longitudinal axis of the sensor 24 is shared by the bezel 26 and the clip 28 and defines directions of insertion and assembly of those components.

The sensor 24, the bezel 26 and the clip 28 will now be described individually in terms of their features and collectively in terms of their interaction.

Referring firstly to Figure 2, a typical parking sensor 24 is generally cylindrical, extending from a transducer 30 at a proximal end to a connector 32 at a distal end. In the variant shown, the sensor 24 has a body 34 of generally octagonal cross section that defines a central longitudinal axis and has flat parallel upper and lower faces. Only the upper face 36 of the sensor body is visible in Figure 2. The transducer 30 is part of a disc-shaped protrusion 38 that is disposed coaxially with the central longitudinal axis of the body 34. A shoulder 40 at the proximal end of the body 34 encircles the protrusion 38.

A pair of spigots project from the upper and lower faces of the body 34 at its distal end. Only one spigot 42 is visible in Figure 2, being that on the upper face 36 of the body 34. Each spigot 42 is a proximally-tapering ramp enabling insertion of the sensor 24 in a proximal direction into the bezel 26, as will be described.

In this sensor variant shown in Figure 2, the connector 32 extends laterally from the distal end of the body and then extends distally in alignment with the central longitudinal axis, the connector therefore being of L-shape. This offset arrangement is known as an 'axial' connector. Another sensor variant has a 'radial' connector that simply extends laterally from the distal end of the body and has no portion extending distally. The preferred embodiment of this invention can be used with both sensor variants, as will be explained. The preferred embodiment can also be used with sensor variants whose connectors have no laterally-extending portion but only a distally-extending portion.

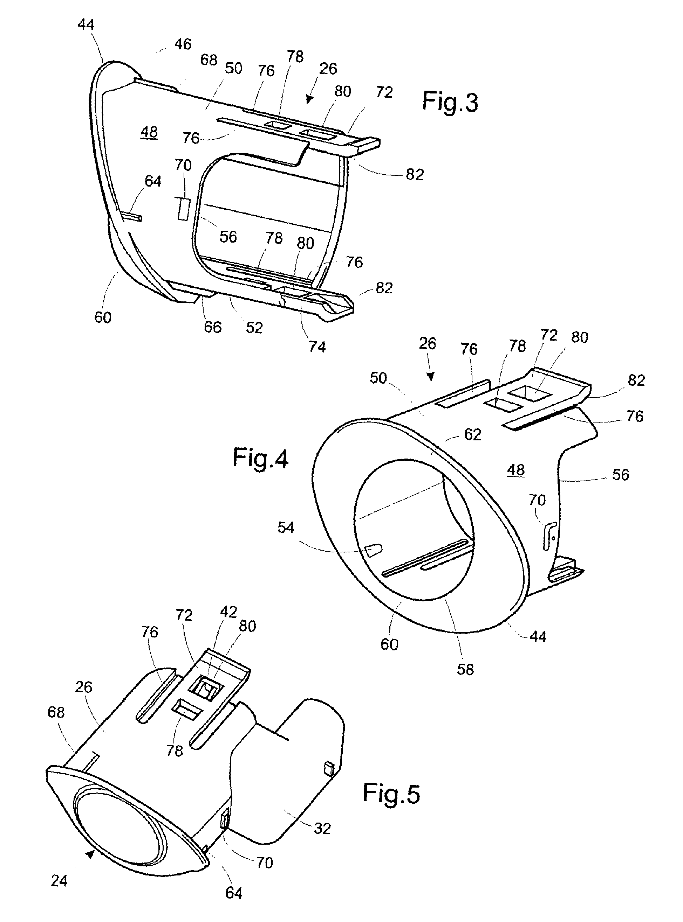

The bezel 26 will now be described with reference to Figures 3 and 4 of the drawings. The bezel 26 is an injection moulding, preferably of polycarbonate. It has a flange 44 at its proximal end having a generally planar slanting distal face 46 that bears against the external face of the bumper skin 20 around the hole to provide a neat finish around the transducer end of the sensor 24. The bezel 26 also has a generally tubular projection 48 extending distally from the flange 44 so as to protrude through the hole behind the bumper skin 20. The bezel flange 44 is inclined with respect to the central longitudinal axis of the bezel 26, which axis is mainly defined by the projection 48.

The distal projection 48 of the bezel 26 is shaped to accommodate the body 34 of the sensor 24, which is inserted into the bezel 26 through the open distal end of the projection 48. The cross-section of the projection 48 approximates to the octagonal cross section of the sensor body 36, including generally flat and parallel upper and lower walls 50, 52. Secure angular location of the sensor 24 within the bezel 26 is assured by the corresponding cross-sections of those components and also by internal ridges within the proximal end of the bezel 26 that co-operate with the exterior of the sensor 24. Those ridges also limit the extent of insertion of the sensor 24 into the bezel 26 as they abut the shoulder 40 at the end of the sensor body 34 around the disc-shaped protrusion 38 that holds the transducer 30. One of the internal ridges 54 is visible in Figure 2. However, such internal features of the bezel 26 are not germane to the present invention and so need not be described in further detail.

The bezel 26 also includes a cut-out 56 to one side of the tubular projection 48. This is to accommodate the connector 32 of the sensor 24 shown in Figure 2, when the sensor 24 of Figure 2 is retained within the bezel 26 of Figures 3 and 4 as shown in Figure 5.

The proximal face of the bezel flange 44 is shaped to define an opening 58 that encircles and exposes the transducer end of the sensor 24. The edge of that opening 58 lies in a plane orthogonal to the central longitudinal axis of the bezel 26. A convexcurved lower portion 60 of the proximal face below the opening 58 is complemented by a concave-curved upper portion 62 of the proximal face above the opening 58. The inclination of the bezel flange 44 is such that its upper edge is disposed proximally with respect to the edge of the opening 58 and its lower edge is disposed distally with respect to the edge of the opening 58.

The distal face 46 of the bezel flange 44 extends around the proximal end of the tubular projection 48. The otherwise continuous junction between the tubular projection 48 and the distal face 46 of the flange 44 is interrupted by ridges 64, 66 and a bulge 68, all extending a short distance along the projection 48 distally from the flange 44, parallel to each other and to the central longitudinal axis of the bezel 26. Four such ridges are provided, two being small and two being larger. One small ridge 64 is situated to each side of the projection 48 of the bezel 26 (only one of which is visible in Figure 2) and the other two, larger ridges 66 are situated on the flat lower wall 52 of the projection 48 (again, only one of the larger ridges is visible in Figure 2).

The ridges 64, 66 are positioned to bite into and engage the edge of the hole in the bumper skin 20 into which the projection 48 of the bezel 26 is inserted as a close sliding fit. This engagement helps to retain the bezel 26 within the hole, especially before the clip 28 has been attached to the bezel 26 as will be described. The engagement of the ridges 64,66 with the edge of the hole also helps to locate the bezel 26 against angular movement within the hole in the bumper skin 20. Shaping the hole to match the cross-section of the projection 48 of the bezel 26 is a further measure that prevents such angular movement, at least to the extent that the perimeter of the hole includes straight portions corresponding to the flat upper and lower walls 50, 52 of the projection 48.

The bulge 68 is situated to one side of the flat upper wall 50 of the projection 48, creating an asymmetrical cross-section as a precaution against inadvertently inserting the projection 48 of the bezel 26 into the hole upside-down. The perimeter of the hole must then include a complementary recess to accommodate the bulge 68.

The bezel 26 includes further features for attaching the sensor 24 to the bezel 26 and for attaching the clip 28 to the bezel 26. The features that attach the clip 28 to the bezel 26 include a pair of teeth 70, one to each side of the tubular projection 48 (only one of which is visible in Figures 3 and 4). Each tooth 70 is a distally-tapering ramp enabling the clip 28 to be engaged with the bezel 26 in a proximal movement as will be described. The bezel 26 further includes a pair of resilient tabs 72, 74 best shown in Figure 3. Each tab 72, 74 extends distally from a respective one of the upper and lower walls 50, 52 of the tubular portion 48, and is partially defined by slots 76 to the sides of those walls 50, 52. The free end portion of each tab 72, 74 has two oblong cut-outs 78, 80 spaced along the tab. The cut-outs 80 nearer the free ends of the tabs 72., 74 constitute a first pair of cut-outs 80 and the cut-outs 78 disposed proximally with respect to the first pair constitute a second pair of cut-outs 78. Like the teeth 70 to the sides of the tubular projection, the second pair of cut-outs 78 enable the clip 28 to be engaged with the bezel 26 as will be described.

The tabs 72, 74 are resiliently biased inwards toward one another, and each terminates in a ramp 82 to ease insertion of the sensor 24 into the bezel 26 past the free ends of the tabs 72, 74. Insertion of the sensor 24 into the bezel 26 causes the tabs 72, 74 to splay apart against their resilient bias, particularly as the tabs 72, 74 ride up over the ramp-shaped 42 at the distal end of the sensor 24. Those spigots 42 then engage in snap-fit manner in respective ones of the first pair of oblong cut-outs 80 in the tabs 72, 74. This is shown in Figure 5 which shows the bezel 26 and sensor 24 without the clip 28 for clarity: it should, however, be noted that the sensor 24 will not usually be inserted into the bezel 26 until after the clip 28 has been engaged with the bezel 26.

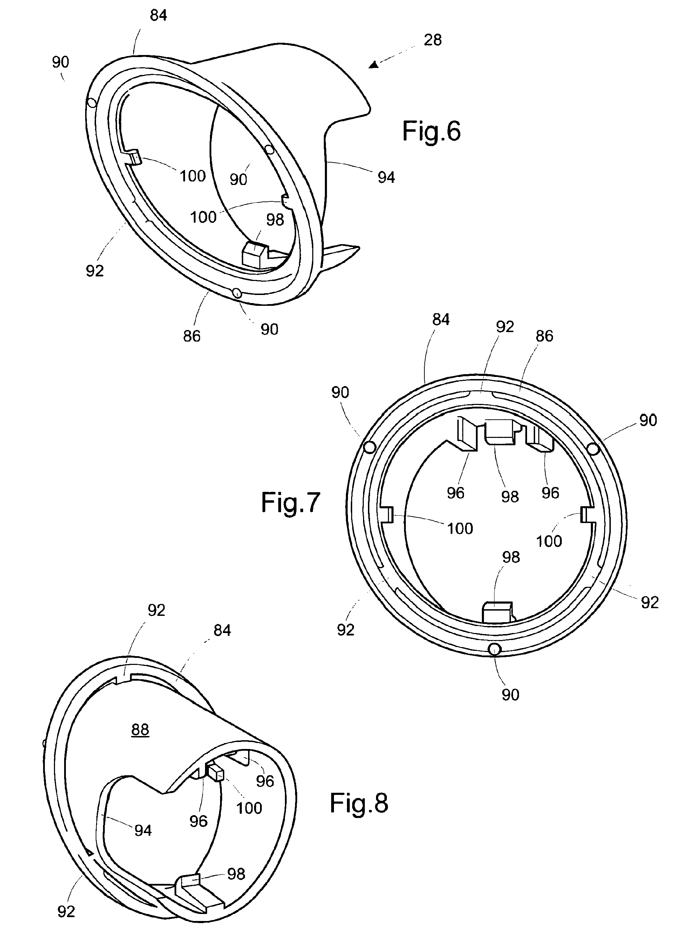

Moving on, the clip 28 will now be described with reference to Figures 6, 7 and 8 of the drawings. Like the bezel 26, the clip 28 shown in those drawings is an injection moulding, preferably of polycarbonate. The clip 28 has a flange 84 at its proximal end having a generally planar slanting proximal face 86. When the clip 28 and bezel 26 are assembled in use, the proximal face 86 of the flange 84 bears against the internal face of the bumper skin 20 around the hole that accommodates the mount 22 and sensor 24. This pulls the bezel flange 44 against the exterior of the bumper skin 20 and pushes the bumper skin 20 against the bezel flange 44.

Like the bezel 26, the clip 28 also has a generally tubular projection 88 extending distally from the flange 84, and the flange 84 is inclined with respect to the central longitudinal axis of the clip 28 as defined by the projection 88. The angle of inclination of the flange 84 with respect to that axis substantially corresponds to the angle of inclination of the bezel flange 44.

The flange 84 of the clip 28 includes proximally-projecting pads 90 distributed around the proximal face 86 of the flange 84; in this embodiment, three pads 90 are substantially equi-spaced around the flange 84. The pads 90 make first contact with the internal face of the bumper skin 20 although resilient deformation of the flange 84 may bring other parts of the proximal face 86 of the flange 84 into contact with the bumper skin 20. The purpose of the pads 90 is to provide easily-adjustable spacers to cater for different bumper shapes, enabling the shape of the mount 22 to be fine-tuned to particular applications without requiring a completely new mould.

The flange 84 of the clip 28 is attached to the distal projection 88 of the clip 28 in such a way as to permit resilient movement of most of the flange 84 relative to the distal projection 88. This enables the clip 28 to cater for different bumper shapes, when used either on different bumpers or at different locations on the same bumper. Freedom of resilient movement is achieved by supporting the flange 84 only at intervals around the distal projection 88 of the clip 28 such that, preferably, the majority of the flange 84 is not directly attached to the projection 88. In the embodiment illustrated, three supports 92 extend between and connect the flange 84 and the distal projection 88 while spacing the remainder of the flange 84 from the projection 88. Preferably, as shown, the supports 92 are disposed between the pads 90 on the flange 84 so as to maximise freedom of movement of the flange 84 in the regions of the pads 90, which regions may be expected to experience the greatest deflection as the pads 90 are the first part of the clip 28 to encounter the internal surface of the bumper skin 20 in use.

It will be noted that if the bezel 26 and clip 28 are of a harder, more rigid material than the bumper skin 20 (which polycarbonate is, in relation to the polypropylene typically used for a bumper skin), the mount 22 may locally deform the bumper skin 22 to a material extent. That deformation further contributes to a neat finish around the transducer end of the sensor 24.

The distal projection 88 of the clip 28 has an internal diameter greater than the external diameter of the corresponding projection 48 of the bezel 26. The clip 28 may therefore be pushed proximally over the distal projection 48 of the bezel 26 to surround and engage with the bezel 26. Like the bezel 26, the clip 28 has a cut-out 94 to one side of the distal projection 88 that, when the clip 28 and bezel 26 are assembled, aligns with the corresponding cut-out 56 of the bezel 26 to accommodate the connector 32 of the sensor 24 shown in Figure 2.

A pair of parallel ridges 96 are situated uppermost within the distal projection 88 of the clip 28 at its distal end. As the clip 28 moves into engagement with the bezel 26, those ridges 96 enter and locate within the slots 76 that partially define the upper resilient tab 72 of the bezel 26. Between the ridges 96 is a proximally-tapering spigot 98: a corresponding spigot 98 is disposed diametrically opposite on the lowermost side of the distal projection 88. Those spigots 98 engage within respective ones of the second pair of oblong cut-outs 78 in the resilient tabs 72, 74 of the bezel 26. Finally, the proximal end of the distal projection 88 of the clip 28 includes an opposed pair of internal teeth 100, one to each side of the open proximal end of the distal projection 88. Those teeth 100 engage with the teeth 70 provided externally on the sides of the distal projection 48 of the bezel 26.

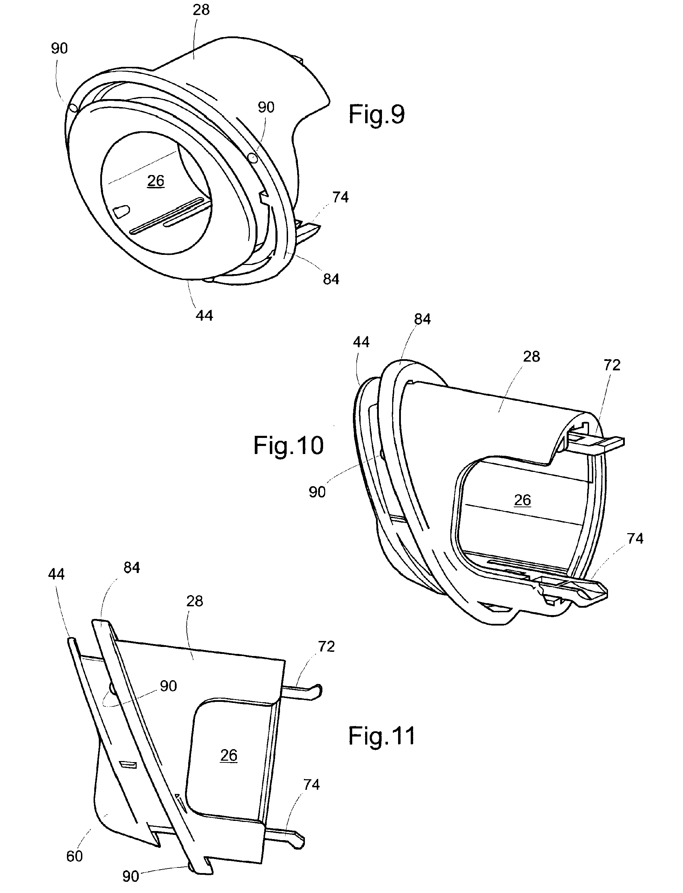

When thus assembled as shown in Figures 9, 10 and 11 of the drawings, the bezel 26 and the clip 28 define a channel between their opposed flanges 44, 84 that can embrace the edge of a hole in a bumper skin 20, as shown in Figure 1. The skin 20 of the bumper is then sandwiched or clamped between the external flange 44 of the bezel 26 and the internal flange 84 of the clip 28. When a parking sensor 24 (not shown in Figures 9, 10 and 11) is inserted into the bezel 26 when the bezel 26 has been retained by the clip 28, the sensor 24 is thereby located securely with respect to the bumper.

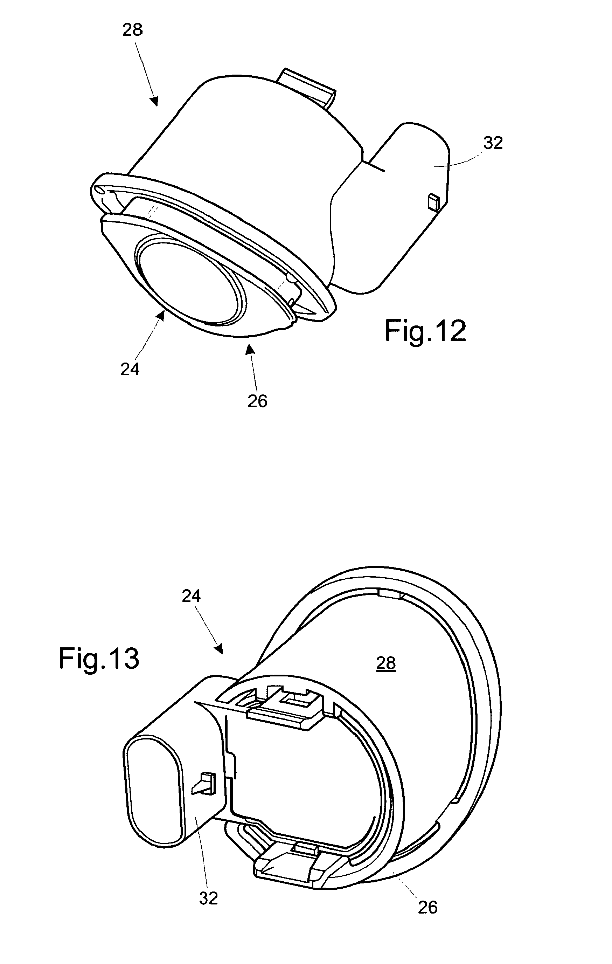

Figures 12 and 13 show the assembly of sensor 24, bezel 26 and clip 28 without the bumper skin 20 shown in Figure 1. The clip 28 must firstly be fitted to the bezel 26 and the sensor 24 is then inserted into the bezel 26. However it is possible that if a more compact sensor has a distally-extending axial connector with no laterally-extending portion - and so is apt to extend only through the open distal end of the bezel 26 - that sensor could be inserted into the bezel 26 before the clip 28 is fitted to the bezel 26. Where parts are supplied ready-assembled or ready for assembly, this can reduce the number of operations on the vehicle production line by at least one operation per sensor fitted to the vehicle.

## Claims

1. A mount (22) for a vehicle parking sensor (24), the mount (22) comprising:
a bezel (26) for receiving the sensor (24), the bezel (26) having a flange (44) at its proximal end and a body (28) extending distally from the flange (44); and
a clip (28) also having a flange (84) at its proximal end and a body (88) extending distally from the flange (84), the clip (28) is configured to be engageable with the bezel (26) to retain the bezel (26) at a sensor location on the vehicle, and wherein the flange of the clip (84) is configured to co-operate with the flange (44) of the bezel to embrace the edge of a mounting hole provided in the vehicle at the sensor location:
wherein the flange (84) of the clip (28) is attached to the body (88) of the clip for resilient movement of at least a majority of said flange (84) with respect to said body:
**characterised by** the flange (84) having a face (86) configured to bear against the periphery of the mounting hole and a plurality of integrally-moulded pads (90) are distributed around that face (86).

2. The mount (22) of Claim 1, wherein the flange of the clip (84) extends completely around the body of the clip (88).

3. The mount (22) of Claim I or Claim 2, wherein the flange of the clip (84) is attached to the body of the clip (88) by a plurality of supports (92) distributed around said body.

4. The mount (22) of Claim 3 and having gaps between the flange (84) and the body (88) of the clip between the supports (92).

5. The mount (22) of Claim 4, wherein the gaps (92) collectively extend around a majority of the circumference of said body.

6. The mount (22) of any of Claims 3 to 5, wherein the pads (90) are angularly disposed between the supports (92).

7. The mount (22) of any preceding Claim, wherein the body of the bezel (48) is substantially tubular.

8. The mount (22) of any preceding Claim, wherein the body of the clip (88) is substantially tubular and surrounds the body of the bezel (88) when the clip (28) is engaged with the bezel (26).

9. The mount (22) of any preceding Claim, wherein the body of the bezel (48) has an open distal end and a lateral cut-out (56) at the distal end.

10. The mount (22) of Claim 9, wherein the body of the clip (88) has a lateral cut-out (94) that substantially aligns with the lateral cut-out (56) of the bezel (26) when the clip (28) is engaged with the bezel (26).

11. The mount (22) of any preceding Claim, wherein the clip (26) is engageable with the bezel (28) by a snap-fit arrangement.

12. The mount (22) of any preceding Claim, wherein the bezel (28) includes formations (96) to interact with the periphery of the mounting hole.

13. The mount (22) of Claim 12, wherein the formations (96) include a flat wall of the body of the bezel (48) that co-operates with a correspondingly shaped section of the periphery of the mounting hole to prevent angular movement of the bezel (28) within the hole.

14. The mount (22) of Claim 12 or Claim 13, wherein the formations (96) include one or more distally-extending ridges (64, 66) that engage with the periphery of the mounting hole.

15. The mount (22) of any of Claims 12 to 14, wherein the formations (96) include an asymmetric bulge (68) co-operable with a corresponding recess in the periphery of the mounting hole to ensure correct orientation of the bezel (26) upon insertion of the bezel (26) into the hole.

16. The (22) mount of any preceding Claim, wherein the bezel (26) includes at least one resilient distally-extending tab (72, 74) for engagement with a parking sensor.

17. The mount (22) of Claim 16, wherein the tab (72, 74) includes a cut-out for engagement with a spigot (42) on the sensor (24).

18. The mount (22) of Claim 16 or Claim 17, wherein the tab (72, 74) also effects engagement of the clip (28) to the bezel (26).

19. The mount (22) of Claim 18, wherein the tab (72, 74) includes a further cut-out for engagement with a spigot (98) on the clip (28).

20. The mount (22) of Claim 20 or Claim 21, wherein the tab (72, 74) is at least partially defined by slots in a wall of the bezel (26) and wherein the clip (28) includes ridges (96) that engage within the slots upon engagement of the clip (28) with the bezel (26).

## Patentansprüche

1. Halterung (22) für einen Fahrzeugparksensor (24), wobei die Halterung (22) Folgendes umfasst:
eine Einfassung (26) zum Aufnehmen des Sensors (24), wobei die Einfassung (26) einen Flansch (44) an ihrem proximalen Ende und einen sich distal vom Flansch (44) erstreckenden Körper (28) aufweist; und
eine Klammer (28), die ebenfalls einen Flansch (84) an ihrem proximalen Ende und einen sich distal vom Flansch (84) erstreckenden Körper (88) aufweist, wobei die Klammer (28) dazu ausgebildet ist, mit der Einfassung (26) in Eingriff treten zu können, um die Einfassung (26) an einem Sensoreinbauort am Fahrzeug zu halten und wobei der Flansch der Klammer (84) dazu ausgebildet ist, mit dem Flansch (44) der Einfassung zusammenzuwirken, um den Rand eines am Sensoreinbauort im Fahrzeug vorgesehenen Befestigungslochs zu umschließen;
wobei der Flansch (84) der Klammer (28) für elastische Bewegung mindestens eines Großteils des genannten Flanschs (84) gegenüber dem genannten Körper am Körper (88) der Klammer befestigt ist;
**dadurch gekennzeichnet, dass** der Flansch (84) eine Fläche (86) hat, die dazu ausgebildet ist, gegen die Umrandung des Befestigungslochs zu drücken und eine Vielzahl integral geformter Polster (90) um diese Fläche (86) verteilt sind.

2. Halterung (22) nach Anspruch 1, wobei sich der Flansch der Klammer (84) vollständig um den Körper der Klammer (88) erstreckt.

3. Halterung (22) nach Anspruch 1 oder Anspruch 2, wobei der Flansch der Klammer (84) mit einer Vielzahl von um den genannten Körper verteilten Haltern (92) am Körper der Klammer (88) befestigt ist.

4. Halterung (22) nach Anspruch 3 mit Lücken zwischen dem Flansch (84) und dem Körper (88) der Klammer zwischen den Haltern (92).

5. Halterung (22) nach Anspruch 4, wobei sich die Lücken (92) kollektiv um einen Großteil des Umfangs des genannten Körpers erstrecken.

6. Halterung (22) nach einem der Ansprüche 3 bis 5, wobei die Polster (90) schräg zwischen den Haltern (92) angeordnet sind.

7. Halterung (22) nach einem der vorangehenden Ansprüche, wobei der Körper der Einfassung (48) im Wesentlichen röhrenförmig ist.

8. Halterung (22) nach einem der vorangehenden Ansprüche, wobei der Körper der Klammer (88) im Wesentlichen röhrenförmig ist und den Körper der Einfassung (88) umgibt, wenn die Klammer (28) mit der Einfassung (26) in Eingriff ist.

9. Halterung (22) nach einem der vorangehenden Ansprüche, wobei der Körper der Einfassung (48) ein offenes distales Ende und einen seitlichen Ausschnitt (56) am distalen Ende hat.

10. Halterung (22) nach Anspruch 9, wobei der Körper der Klammer (88) einen seitlichen Ausschnitt (94) hat, der im Wesentlichen mit dem seitlichen Ausschnitt (56) der Einfassung (26) fluchtet, wenn die Klammer (28) mit der Einfassung (26) in Eingriff ist.

11. Halterung (22) nach einem der vorangehenden Ansprüche, wobei die Klammer (26) mit einer Einschnappanordnung mit der Einfassung (28) in Eingriff gebracht werden kann.

12. Halterung (22) nach einem der vorangehenden Ansprüche, wobei die Einfassung (28) Gebilde (96) umfasst, um mit der Umrandung des Befestigungslochs in Wechselwirkung zu treten.

13. Halterung (22) nach Anspruch 12, wobei die Gebilde (96) eine flache Wand des Körpers der Einfassung (48) umfassen, die mit einem entsprechend geformten Abschnitt der Umrandung des Befestigungslochs zusammenwirkt, um die schräge Bewegung der Einfassung (28) in dem Loch zu verhindern.

14. Halterung (22) nach Anspruch 12 oder Anspruch 13, wobei die Gebilde (96) eine oder mehrere sich distal erstreckende Rippen (64, 66) umfassen, die mit der Umrandung des Befestigungslochs in Eingriff treten.

15. Halterung (22) nach einem der Ansprüche 12 bis 14, wobei die Gebilde (96) eine asymmetrische Wölbung (68) umfassen, die mit einer entsprechenden Vertiefung in der Umrandung des Befestigungslochs zusammenwirken kann, um die korrekte Ausrichtung der Einfassung (26) beim Einstecken der Einfassung (26) in das Loch zu gewährleisten.

16. Halterung (22) nach einem der vorangehenden Ansprüche, wobei die Einfassung (26) mindestens eine elastische, sich distal erstreckende Lasche (72, 74) für den Eingriff mit einem Parksensor umfasst.

17. Halterung (22) nach Anspruch 16, wobei die Lasche (72, 74) einen Ausschnitt für den Eingriff mit einem Zapfen (42) am Sensor (24) umfasst.

18. Halterung (22) nach Anspruch 16 oder Anspruch 17, wobei die Lasche (72, 74) außerdem das Einrasten der Klammer (28) an der Einfassung (26) bewirkt.

19. Halterung (22) nach Anspruch 18, wobei die Lasche (72, 74) einen weiteren Ausschnitt für den Eingriff mit einem Zapfen (98) an der Klammer (28) umfasst.

20. Halterung (22) nach Anspruch 20 oder Anspruch 21, wobei die Lasche (72, 74) mindestens teilweise durch Schlitze in einer Wand der Einfassung (26) definiert ist und wobei die Klammer (28) Rippen (96) umfasst, die beim Eingreifen der Klammer (28) mit der Einfassung (26) in die Schlitze einrasten.

## Revendications

1. Monture (22) pour capteur de stationnement de véhicule (24), la monture (22) comprenant :
une lunette (26) pour recevoir le capteur (24), la lunette (26) ayant une bride (44) à son extrémité proximale et un corps (28) s'étendant distalement depuis la bride (44) ; et
un clip (28) ayant également une bride (84) à son extrémité proximale et un corps (88) s'étendant distalement depuis la bride (84), le clip (28) étant configuré pour être engageable avec la lunette (26) afin de retenir la lunette (26) à une position de capteur sur le véhicule, et dans lequel la bride du clip (84) est configurée pour coopérer avec la bride (44) de la lunette afin d'englober le bord d'un orifice de montage aménagé dans le véhicule à la position de capteur ;
dans lequel la bride (84) du clip (28) est attachée au corps (88) du clip pour un mouvement élastique d'au moins une majeure partie de ladite bride (84) relativement audit corps ;
**caractérisée en ce que** la bride (84) a une face (86) configurée pour porter contre la périphérie de l'orifice de montage et une pluralité de patins moulés de façon intégrante (90) répartie autour de cette face (86).

2. Monture (22) selon la revendication 1, dans laquelle la bride du clip (84) s'étend complètement autour du corps du clip (84).

3. Monture (22) selon la revendication 1 ou la revendication 2, dans laquelle la bride du clip (84) est attachée au corps du clip (88) par une pluralité de supports (92) répartie autour dudit corps.

4. Monture (22) selon la revendication 3 et présentant des espaces entre la bride (84) et le corps (88) du clip entre les supports (92).

5. Monture (22) selon la revendication 4, dans laquelle les espaces (92) s'étendent collectivement autour d'une majeure partie de la circonférence dudit corps.

6. Monture (22) selon l'une quelconque des revendications 3 à 5, dans laquelle les patins (90) sont disposés angulairement entre les supports (92).

7. Monture (22) selon l'une quelconque des revendications précédentes, dans laquelle le corps de la lunette (48) est sensiblement tubulaire.

8. Monture (22) selon l'une quelconque des revendications précédentes, dans laquelle le corps du clip (88) est sensiblement tubulaire et entoure le corps de la lunette (88) quand le clip (28) est engagé avec la lunette (26).

9. Monture (22) selon l'une quelconque des revendications précédentes, dans laquelle le corps de la lunette (48) a une extrémité distale ouverte et une découpe latérale (56) à l'extrémité distale.

10. Monture (22) selon la revendication 9, dans laquelle le corps du clip (88) a une découpe latérale (94) qui s'aligne sensiblement avec la découpe latérale (56) de la lunette (26) quand le clip (28) est engagé avec la lunette (26).

11. Monture (22) selon l'une quelconque des revendications précédentes, dans laquelle le clip (26) est engageable avec la lunette (28) dans un agencement à fixation par emboîtement.

12. Monture (22) selon l'une quelconque des revendications précédentes, dans laquelle la lunette (28) comporte des formations (96) pour interagir avec la périphérie de l'orifice de montage.

13. Monture (22) selon la revendication 12, dans laquelle les formations (96) comportent une paroi plate du corps de la lunette (48) qui coopère avec une section de forme correspondante de la périphérie de l'orifice de montage afin d'empêcher le déplacement angulaire de la lunette (28) à l'intérieur de orifice.

14. Monture (22) selon la revendication 12 ou la revendication 13, dans laquelle les formations (96) comportent une ou plusieurs saillies s'étendant distalement (64, 66) qui s'engagent avec la périphérie de l'orifice de montage.

15. Monture (22) selon l'une quelconque des revendications 12 à 14, dans laquelle les formations (96) comportent une protubérance asymétrique (68) pouvant coopérer avec un évidement correspondant dans la périphérie de l'orifice de montage afin de garantir l'orientation correcte de la lunette (26) lors de l'insertion de la lunette (26) dans l'orifice.

16. Monture (22) selon l'une quelconque des revendications précédentes, dans laquelle la lunette (26) comporte au moins une languette élastique s'étendant distalement (72, 74) destinée à s'engager avec un capteur de stationnement.

17. Monture (22) selon la revendication 16, dans laquelle la languette (72, 74) comporte une découpe destinée à s'engager avec un ergot (42) sur le capteur (24).

18. Monture (22) selon la revendication 16 ou la revendication 17, dans laquelle la languette (72, 74) effectue aussi l'engagement du clip (28) avec la lunette (26).

19. Monture (22) selon la revendication 18, dans laquelle la languette (72, 74) comporte une autre découpe destinée à s'engager avec un ergot (98) sur le clip (28).

20. Monture (22) selon la revendication 20 ou la revendication 21, dans laquelle la languette (72, 74) est au moins partiellement définie par des fentes dans une paroi de la lunette (26) et dans laquelle le clip (28) comporte des saillies (96) qui s'engagent à l'intérieur des fentes lors de l'engagement du clip (28) avec la lunette (26).
